(19) Europäisches Patentamt
European Patent Office
Office européen des brevets

(11) **EP 0 756 165 B1**

(12) **EUROPÄISCHE PATENTSCHRIFT**

(45) Veröffentlichungstag und Bekanntmachung des Hinweises auf die Patenterteilung:
**13.03.2002   Patentblatt 2002/11**

(51) Int Cl.$^7$: **G01L 25/00**

(21) Anmeldenummer: **96109804.3**

(22) Anmeldetag: **19.06.1996**

(54) **Verfahren und Vorrichtung zur Kalibrierung von Drehmoment-Messeinrichtungen**

Method and device for calibrating of torque in measuring installation

Méthode et dispositif pour calibrer un système de mesure de couple

(84) Benannte Vertragsstaaten:
**DE ES FR GB NL**

(30) Priorität: **25.07.1995  DE 19527062**

(43) Veröffentlichungstag der Anmeldung:
**29.01.1997   Patentblatt 1997/05**

(73) Patentinhaber: **Schenck Pegasus GmbH**
**64293 Darmstadt (DE)**

(72) Erfinder: **Milz, Udo, Dr.**
**64807 Dieburg (DE)**

(74) Vertreter: **Sievers, Uwe, Dipl.-Ing.**
**Carl Schenck AG,**
**Patentabteilung,**
**Landwehrstrasse 55**
**64293 Darmstadt (DE)**

(56) Entgegenhaltungen:
DE-A- 3 331 708       DE-A- 4 216 973
FR-A- 2 480 940       GB-A- 1 284 498
US-A- 5 152 182

- ADOLF K ET AL: "SPECIFICATIONS AND UNCERTAINTY OF MEASURMENT OF THE PTB'S 1 KNM TORQUE STANDARD MACHINE" 5.September 1995 , PROCEEDINGS OF THE 14TH. INTERNATIONAL CONFERENCE: STATE OF THE ART FORCE AND MASS MEASUREMENT, WARSAW, SEPT. 5 - 8, 1995, NR. CONF. 14, PAGE(S) 174 - 177 , INTERNATIONAL MEASUREMENT CONFEDERATION (IMEKO) XP000599009 * Seite 175 - Seite 176 *
- PATENT ABSTRACTS OF JAPAN vol. 014, no. 128 (P-1019), 9.März 1990 & JP 01 320444 A (MITSUBISHI ELECTRIC CORP), 26.Dezember 1989,
- PATENT ABSTRACTS OF JAPAN vol. 012, no. 295 (P-743), 11.August 1988 & JP 63 070137 A (FUJITSU LTD), 30.März 1988,
- SOVIET INVENTIONS ILLUSTRATED Section EI, Week 9101 20.Februar 1991 Derwent Publications Ltd., London, GB; Class S02, AN 91-006083 XP002045352 & SU 1 566 237 A (VINNITSA POLY) , 23.Mai 1990

**Beschreibung**

Die Erfindung betrifft ein Verfahren zur Kalibrierung von Drehmoment-Meßeinrichtungen für umlaufende Maschinen, bei denen ein das pendelnd gelagerte Maschinengehäuse stützender Kraftaufnehmer ein Meßsignal liefert, wobei zur Kalibierung des Drehmomentmeßsystems an einem mit dem Maschinengehäuse verbundenen Belastungsarm an einer ersten Belastungsstelle ein erstes Gewicht aufgebracht und das dadurch ausgeübte Drehmoment als Produkt der Gewichtskraft und der wirksamen Hebellänge bestimmt wird, wobei das vom Kraftaufnehmer gelieferte erste Signal erfaßt wird.

Das an der Welle von umlaufenden Maschinen abgegebene Drehmoment wird stationär in einfacher Weise über das Reaktionsmoment des Maschinengehäuses bestimmt. Das Maschinengehäuse ist dazu drehbar als Pendelkörper gelagert, der sich auf einen Kraftaufnehmer abstützt, der die abstützende Reaktionskraft in ein elektrisch auswertbares Meßsignal umsetzt. Dieses Meßsignal ist ein Maß für das Reaktionsmoment.

Zweck der Kalibrierung ist insbesondere die Bestimmung der Kalibrierkonstanten $k_M$, die den Zusammenhang zwischen dem an der Welle abgegebenen Drehmoment und dem Meßsignal des Kraftaufnehmers beschreibt.

Bei einem bekannten und häufig verwendeten Kalibrierverfahren der eingangs genannten Gattung wird an das Maschinengehäuse ein Belastungsarm angeschraubt und mit einem Gewicht belastet. Dadurch wird auf das pendelnd gelagerte Maschinengehäuse ein Drehmoment ausgeübt, dessen Größe sich als das Produkt aus der Gewichtskraft und der wirksamen Hebellänge bestimmt.

Während das aufgebrachte Gewicht sehr genau bestimmt werden kann, ist die Bestimmung der wirksamen Hebellänge schwierig und ungenau, weil die genaue Lage des Drehpunktes nur ungenau oder nur mit sehr hohem Meßaufwand bestimmt werden kann. Bei vertretbarem Meßaufwand ist daher das bekannte Kalibrierverfahren ungenau; es genügt daher nicht den Anforderungen der Norm ISO 9000.

Aufgabe der Erfindung ist es daher, ein Verfahren der eingangs genannten Gattung so auszubilden, daß es eine genaue und leicht dokumentierbare Drehmomentenkalibrierung ermöglicht, ohne daß hierfür eine aufwendige Bestimmung des Drehpunktes erforderlich ist.

Diese Aufgabe wird erfindungsgemäß dadurch gelöst, daß zeitlich unabhängig von der Belastung an der ersten Belastungsstelle an mindestens einer zweiten Belastungsstelle des Belastungsarms ein zweites Gewicht aufgebracht und das vom Kraftaufnehmer gelieferte zweite Signal erfaßt wird, und daß die wirksame Hebellänge der ersten Belastungsstelle nach der Formel bestimmt wird:

$$h_W = \frac{S1\ (h1 - h2)}{S1 - \dfrac{G1}{G2} S2}$$

wobei ist:

$h_W$ - die wirksame Hebellänge der ersten Belastungsstelle B1;

G1 - die Masse des an der ersten Belastungsstelle B1 aufgebrachten Gewichts;

G2 - die Masse des an der zweiten Belastungsstelle B2 aufgebrachten Gewichts;

S1 - das bei Belastung an der ersten Belastungsstelle B1 vom Kraftaufnehmer abgegebene Signal;

S2 - das bei Belastung an der zweiten Belastungsstelle B2 vom Kraftaufnehmer abgegebene Signal;

(h1-h2) - der Abstand der beiden Belastungsstellen.

Die Kalibrierkonstante $k_M$ des Drehmomentmeßsystems wird nach folgender Formel bestimmt:

$$k_M = \frac{S1}{g \cdot G1 \cdot h_W},$$

wobei g = die Fallbeschleunigung 9,81 m/s$^2$ ist.

Zur genauen Bestimmung der für den Kalibriervorgang wichtigen wirksamen Hebellänge $h_W$ ist als geometrische Größe nur der Abstand zwischen den beiden Belastungsstellen zu bestimmen. Dieser Abstand kann mit großer Genauigkeit gemessen werden. Darüberhinaus ist nur die Bestimmung der jeweils aufgebrachten Gewichte und der dabei erzeugten Meßsignale erforderlich. Hierbei kann die Bestimmung der Gewichte sogar entfallen, wenn an beiden Belastungsstellen gleich große Gewichte aufgebracht werden.

Eine vorteilhafte Ausgestaltung des Erfindungsgedankens ist Gegenstand eines Unteranspruchs.

Die Erfindung betrifft auch eine vorteilhafte Vorrichtung zur Durchführung des erfindungsgemäßen Verfahrens. Ausgehend von einer bekannten Vorrichtung zur Kalibrierung von Drehmoment-Meßeinrichtungen für umlaufende Maschinen mit einem auf einem Kraftaufnehmer abgestützten, pendelnd gelagerten Maschinengehäuse, mit dem ein Belastungsarm verbunden ist, der eine erste Belastungsstelle zum Aufbringen eines ersten Gewichts aufweist, ist die erfindungsgemäße Vorrichtung dadurch gekennzeichnet, daß der Belastungsarm eine zweite Belastungsstelle zum Aufbringen eines zweiten Gewichts aufweist.

Der konstruktive Mehraufwand, der die Durchführung des sehr vorteilhaften Kalibrierverfahrens ermöglicht, ist somit äußerst gering.

Vorteilhafte Ausgestaltungen der erfindungsgemäßen Vorrichtung sind Gegenstand weiterer Unteransprüche.

Nachfolgend werden Ausführungsbeispiele der Erfindung in Zusammenhang mit den beigefügten Zeichnungen näher erläutert. Es zeigt:

Fig. 1 in vereinfachter Darstellungsweise eine umlaufende Maschine mit einer Vorrichtung zur Kalibrierung einer Drehmoment-Meßeinrichtung hierfür und

Fig. 2 in einer Darstellung entsprechend der Fig. 1 eine abgewandelte Ausführungsform.

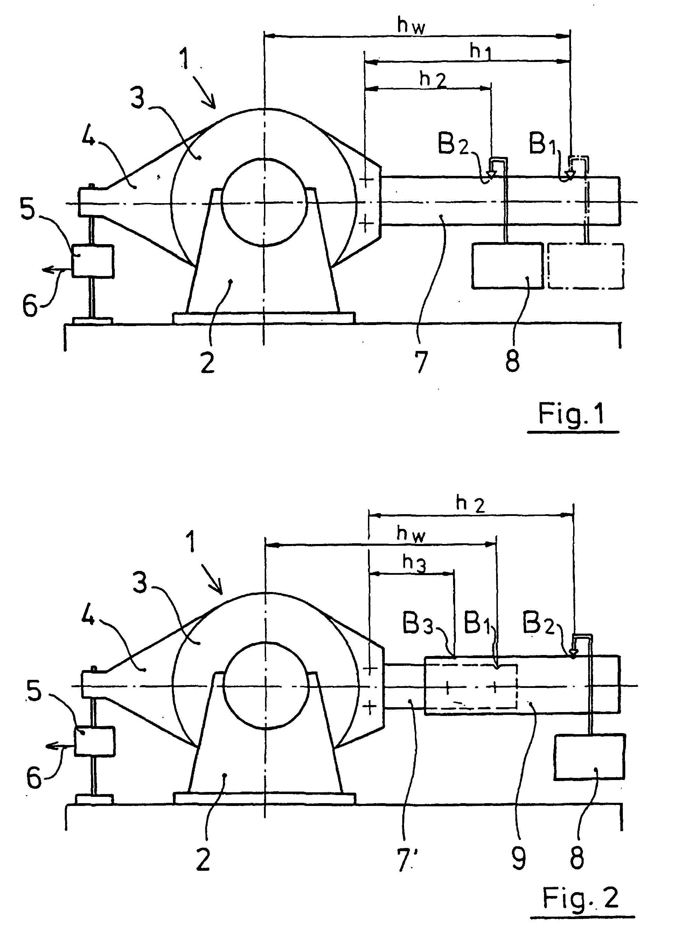

Die in Fig. 1 dargestellte umlaufende Maschine 1, beispielsweise ein Elektromotor, weist ein pendelnd in einem Lager 2 gelagertes Maschinengehäuse 3 auf, das sich mit einem daran angebrachten Arm 4 auf einem elektromechanischen Kraftaufnehmer 5 abstützt. Zur Bestimmung des von der Maschine 1 an der Welle abgegebenen Drehmoments wird die auf den Kraftaufnehmer 5 wirkende Reaktionskraft des Maschinengehäuses 3 in ein elektrisches Meßsignal umgewandelt, das an einem Signalausgang 6 des Kraftaufnehmers 5 ansteht und einer (nicht dargestellten) Auswerteschaltung zugeführt wird.

Zur Kalibrierung einer derartigen Drehmoment-Meßeinrichtung wird am Maschinengehäuse 3 ein Belastungsarm 7 befestigt, der eine erste Belastungsstelle B1 und eine zweite Belastungsstelle B2 aufweist, die beispielsweise als Schneiden oder Pfannen ausgebildet sind.

An diesen Belastungsstellen B1 und B2 können nacheinander Gewichtskörper 8 angehängt werden, durch die Gewichtskräfte zeitlich unabhängig voneinander auf den Belastungsarm 7 wirken.

Der zu bestimmende radiale Abstand zwischen der ersten Belastungsstelle B 1 und der zweiten Belastungsstelle B2, der sich als Differenz der Abstände h1 bzw. h2 zu einer festgelegten Stelle, beispielsweise zur Befestigungsstelle des Belastungsarms 7 darstellt, wird gemessen. Beim Aufbringen eines ersten Gewichts G1 bzw. eines zweiten Gewichts G2 wird das sich jeweils am Signalausgang 6 einstellende erste Meßsignal S1 und das zweite Meßsignal S2 bestimmt.

Aus diesen Größen ergibt sich die wirksame Hebellänge $h_W$, mit der eine an der ersten Belastungsstelle B1 wirkende Gewichtskraft zu multiplizieren ist, um das dadurch auf das Maschinengehäuse 3 ausgeübte Drehmoment zu bestimmen:

$$h_W = \frac{S1 \cdot (h1 - h2)}{S1 - \frac{G1}{G2} \cdot S2}$$

Die Kalibrierkonstante $k_M$, die den Zusammenhang zwischen dem an der Welle abgwgebenen Drehmoment und dem Meßsignal des Kraftaufnehmers beschreibt, ergibt sich zu:

$$k_M = \frac{S1}{g \cdot G1 \cdot h_W}.$$

Fig. 2, bei der gleiche Teile mit gleichen Bezugszeichen wie in Fig. 1 versehen sind, stellt eine demgegenüber abgewandelte Ausführungsform einer Vorrichtung zur Kalibrierung der Drehmoment-Meßeinrichtung für die Maschine 1 dar. Während es bei der Vorrichtung nach Fig. 1 zur Durchführung des Kalibrierverfahrens erforderlich ist, entweder an einem vorhandenen Belastungsarm 7 eine zweite Belastungsstelle B2 vorzusehen oder - wenn dies zu aufwendig oder nicht möglich ist - einen vorhandenen, mit nur einer Belastungsstelle versehenen Belastungsarm gegen den Belastungsarm 7 mit zwei Belastungsstellen auszutauschen, wird bei dem in Fig. 2 gezeigten Ausführungsbeispiel davon ausgegangen, daß ein bereits vorhandener Belastungsarm 7', der nur eine Belastungsstelle B1 zur Aufbringung des Kalibriergewichts 8 aufweist, unverändert beibehalten werden soll. Zur Durchführung des Kalibrierverfahrens wird hierbei ein Kalibrierteil 9 lösbar mit dem Belastungsarm 7' verbunden. Das Kalibrierteil 9 ist beispielsweise eine lösbar auf dem Belastungsarm 7' aufgesetzte Hebelverlängerung. Die zweite Belastungsstelle B2 und eine dritte Belastungsstelle B3 sind an dem Kalibrierteil 9 vorgesehen.

Die Kalibrierung erfolgt bei der Vorrichtung nach Fig. 2 in der Weise, daß an den Belastungsstellen B2 und B3 nacheinander jeweils ein Gewicht G2 bzw. G3 aufgebracht und das sich jeweils am Signalausgang 6 einstellende Meßsignal S2 bzw. S3 bestimmt wird.

Nach dem Abnehmen des Belastungsteils 9 wird in entsprechender Weise an der Belastungsstelle B1 ein Gewicht G1 aufgebracht und das Meßsignal S1 bestimmt.

Die für die Belastungsstelle B1 geltende wirksame Hebellänge hw, die in der schon beschriebenen Weise zur Kalibrierung verwendet werden kann, wird sodann nach der Formel bestimmt:

$$h_W = \frac{G2 \cdot S1 \cdot (h2 - h3)}{G1 \cdot (S2 - \frac{G2}{G3} \cdot S3)}$$

Man erkennt, daß auch hierbei als einzige geometrische Größe nur der Abstand zwischen den Belastungsstellen B2 und B3 auf dem Belastungsteil 9 bestimmt werden muß. Geometrische Vermessungen am vorhandenen Belastungsarm 7' und an der Maschine sind hierbei nicht erforderlich.

Wenn für genaue Messungen der Linearitätsfehler des Meßsystems nicht vernachlässigt werden kann, sollten die an den drei Belastungsstellen aufgebrachten Gewichte G1, G2 und G3 so gewählt werden, daß bei jedem der Kalibrierschritte das wirksame Moment annähernd konstant bleibt. Hierzu reicht es aus, die jeweils wirksame Hebellänge von der Belastungsstelle bis zum Drehpunkt der Maschine 1 grob auszumessen.

**Patentansprüche**

1. Verfahren zur Kalibrierung von Drehmoment-Meßeinrichtungen für umlaufende Maschinen, bei denen ein das pendelnd gelagerte Maschinengehäuse stützender Kraftaufnehmer ein Meßsignal liefert, wobei zur Kalibierung des Drehmomentmeßsystems an einem mit dem Maschinengehäuse verbundenen Belastungsarm an einer ersten Belastungsstelle ein erstes Gewicht aufgebracht und das dadurch ausgeübte Drehmoment als Produkt der Gewichtskraft und der wirksamen Hebellänge bestimmt wird, wobei das vom Kraftaufnehmer gelieferte erste Signal erfaßt wird, **dadurch gekennzeichnet, daß** zeitlich unabhängig von der Belastung an der ersten Belastungsstelle (B1) an mindestens einer zweiten Belastungsstelle (B2) des Belastungsarms (7, 7') ein zweites Gewicht (G2) aufgebracht und das vom Kraftaufnehmer (5) gelieferte zweite Signal (S2) erfaßt wird, und daß die wirksame Hebellänge ($h_W$) der ersten Belastungsstelle B1 nach der Formel bestimmt wird:

$$h_W = \frac{S1 \cdot (h1 - h2)}{S1 - \frac{G1}{G2} \cdot S2},$$

wobei ist:

$h_W$ - die wirksame Hebellänge der ersten Belastungsstelle;

G1 - die Masse des an der ersten Belastungsstelle aufgebrachten Gewichts;

G2 - die Masse des an der zweiten Belastungsstelle aufgebrachten Gewichts;

S1 - das bei Belastung an der ersten Belastungsstelle vom Kraftaufnehmer abgegebene Signal;

S2 - das bei Belastung an der zweiten Belastungsstelle vom Kraftaufnehmer abgegebene Signal;

(h1-h2) - der Abstand der beiden Belastungsstellen.

2. Verfahren nach Anspruch 1, **dadurch gekennzeichnet, daß** zeitlich unabhängig von den Belastungen an der ersten und der zweiten Belastungsstelle (B1 bzw. B2) an einer dritten Belastungsstelle (B3) ein drittes Gewicht (G3) aufgebracht und das vom Kraftaufnehmer (5) gelieferte dritte Signal (S3) erfaßt wird und daß die wirksame Hebellänge (hw) der ersten Belastungsstelle (B1) nach der Formel bestimmt wird:

$$h_W = \frac{G2 \cdot S1 \cdot (h2 - h3)}{G1 \cdot (S2 - \frac{G2}{G3} S3)}$$

wobei zusätzlich ist:

G3 - das an der dritten Belastungsstelle aufgebrachte Gewicht;

S3 - das bei Belastung an der dritten Belastungsstelle vom Kraftaufnehmer abgegebene Signal;

(h2 - h3) - der Abstand zwischen der zweiten und der dritten Belastungsstelle.

3. Vorrichtung zur Durchführung des Verfahrens nach Anspruch 1 für umlaufende Maschinen (1) mit einem auf einem Kraftaufnehmer (5) abgestützten, pendelnd gelagerten Maschinengehäuse (3), mit dem ein Belastungsarm (7,) verbunden ist, der eine erste Belastungsstelle (B1) zum Aufbringen eines ersten Gewichts (G1) aufweist, **dadurch gekennzeichnet, daß** der Belastungsarm (7) eine zweite Belastungsstelle (B2) zum Aufbringen eines zweiten Gewichts (G2) aufweist.

4. Vorrichtung nach Anspruch 3 zur Durchführung des Verfahrens nach Anspruch 2, **dadurch gekennzeichnet, daß** der Belastungsarm (7') eine dritte Belastungsstelle (B3) zum Aufbringen eines dritten Gewichts (G3) aufweist.

5. Vorrichtung nach Anspruch 4, **dadurch gekennzeichnet, daß** die zweite und die dritte Belastungsstelle (B2 bzw. B3) an einem lösbar mit dem Belastungsarm (7') verbundenen Kalibrierteil (9) vorgesehen sind.

6. Vorrichtung nach Anspruch 5, **dadurch gekennzeichnet, daß** das Kalibrierteil (9) eine lösbar auf den Belastungsarm (7') aufgesetzte Hebelverlängerung ist.

7. Vorrichtung nach einem der Ansprüche 3-5, **dadurch gekennzeichnet, daß** die Belastungsstellen (B1, B2, B3) als Schneiden oder Pfannen ausgebildet sind.

**Claims**

1. A method of calibrating torque measuring devices for rotary machines wherein a test signal is delivered by a force transducer supporting the machine housing which is mounted in a pendulum bearing, wherein, for the purposes of calibrating the torque measuring system, a first weight is applied at a first loading position on a loading arm which is connected to the machine housing and the torque exerted thereby is determined in the form of the product of the weight and the effective length of the lever, wherein the first signal delivered by the force transducer is detected, **characterised in that**, independently of the time of applying the load at the first loading position (B1), a second weight (G2) is applied to at least one second loading position (B2) of the loading arm (7, 7') and the second signal (S2) delivered by the force transducer (5) is detected, and **in that** the effective lever length (hw) of the first loading position B1 is determined in accordance with the following equation:

$$hw = \frac{S1 \cdot (h1 - h2)}{S1 - \dfrac{G1}{G2} \cdot S2}$$

wherein

hw      is the effective lever length of the first loading position;

G1      is the mass of the weight applied at the first loading position;

G2      is the mass of the weight applied at the second loading position;

S1      is the signal emitted by the force transducer when a load is applied at the first loading position;

S2      is the signal emitted by the force transducer when a load is applied at the second loading position;

(h1 - h2)      is the distance between the two loading positions.

2. A method in accordance with Claim 1, **characterised in that**, independently of the time of applying the loads at the first and the second loading positions (B1 and B2), a third weight (G3) is applied at a third loading position (B3) and the third signal (S3) delivered by the force transducer (5) is detected, and **in that** the effective lever length (hw) of the first loading position (B1) is determined in accordance with the following equation:

$$hw = \frac{G2 \cdot S1 \cdot (h2 - h3)}{G1 \cdot (S2 - \dfrac{G2}{G3} S3}\text{,}$$

where, in addition

G3      is the weight applied at the third loading position;

S1      is the signal emitted by the force transducer when a load is applied at the third loading position;

(h2 - h3)      is the distance between the second and the third loading positions.

3. A device for carrying out the method in accordance with Claim 1 for rotary machines (1) having a machine housing (3) which is mounted in a pendulum bearing and supported by a force transducer (5), and to which said housing there is connected a loading arm (7,) which comprises a first loading position (B1) for the application of a first weight (G1), **characterised in that** the loading arm (7) comprises a second loading position (B2) for the application of a second weight (G2).

4. A device in accordance with Claim 3 for carrying out the method in accordance with Claim 2, **characterised in that** the loading arm (7') comprises a third loading position (B3) for the application of a third weight (G3).

5. A device in accordance with Claim 4, **characterised in that** the second and the third loading positions (B2 and B3) are provided on a calibrating member (9) which is releasably connected to the loading arm (7').

6. A device in accordance with Claim 5, **characterised in that** the calibrating member (9) is a lever-extending member which is releasably attached to the loading arm (7').

7. A device in accordance with any of the Claims 3 - 5, **characterised in that** the loading positions (B1, B2, B3) are in the form of knife edges or scale pans.

## Revendications

1. Procédé pour calibrer des dispositifs de mesure du couple de rotation pour des machines tournantes, dans lesquels un transducteur de force, qui soutient le carter de la machine monté oscillant, fournit un signal de mesure, dans lequel pour calibrer le système de mesure du couple de rotation, un premier poids est appliqué sur un bras de charge relié au carter de la machine, en un premier point de charge, et le couple de rotation ainsi exercé est déterminé en tant que produit de la force de poids et de la longueur de levier utile, dans lequel le premier signal fourni par le transducteur de force est détecté, **caractérisé en ce qu'**un deuxième poids (G2) est appliqué en au moins un deuxième point de charge (B2) du bras de charge (7, 7'), indépendamment dans le temps de la charge au premier point de charge (B1), et le deuxième signal (S2) fourni par le transducteur de force (5) est détecté, et **en ce que** la longueur de levier utile (hw) du premier point de charge (B1) est déterminée d'après la formule :

$$hw = \frac{S1.(h1 - h2)}{S1 - \dfrac{G1}{G2}.S2}$$

dans laquelle :

> hw - est la longueur de levier utile du premier point de charge ;
>
> G1 - est la masse du poids appliqué au premier point de charge ;
>
> G2 - est la masse du poids appliqué au deuxième point de charge ;
>
> S1 - est le signal délivré par le transducteur de force en cas de charge au premier point de charge ;
>
> S2 - est le signal délivré par le transducteur de force en cas de charge au deuxième point de charge ;
>
> (h1 - h2) - est la distance entre les deux points de charge.

**2.** Procédé selon la revendication 1, **caractérisé en ce qu'**il est appliqué un troisième poids (G3) en un troisième point de charge (B3), indépendamment dans le temps des charges sur le premier et le deuxième points de charge (respectivement B1 et B2) et le troisième signal (S3) fourni par le transducteur de force (5) est détecté, et **en ce que** la longueur de levier utile (hw) du premier point de charge (B1) est déterminée d'après la formule :

$$hw = \frac{G2.S1.(h2 - h3)}{G1.(S2 - \dfrac{G2}{G3}S3)}$$

dans laquelle en outre :

> G3 - est le poids appliqué au troisième point de charge ;
>
> S3 - est le signal délivré par le transducteur de force en cas de charge au troisième point de charge ;
>
> (h2 - h3) - est la distance entre le deuxième et le troisième point de charge.

**3.** Dispositif pour la mise en oeuvre du procédé selon la revendication 1, pour des machines tournantes (1) comportant un carter de machine (3) monté oscillant, supporté par un transducteur de force (5), auquel est relié un bras de charge (7) qui présente un premier point de charge (B1) pour l'application d'un premier poids (G1), **caractérisé en ce que** le bras de charge (7) présente un deuxième point de charge (B2) pour l'application d'un deuxième poids (G2).

**4.** Dispositif selon la revendication 3 pour la mise en oeuvre du procédé selon la revendication 2, **caractérisé en ce que** le bras de charge (7') présente un troisième point de charge (B3) pour l'application d'un troisième poids (G3).

**5.** Dispositif selon la revendication 4, **caractérisé en ce que** le deuxième et le troisième points de charge (respectivement B2 et B3) sont prévus sur un élément de calibrage (9) relié de manière non permanente au bras de charge (7').

**6.** Dispositif selon la revendication 5, **caractérisé en ce que** l'élément de calibrage (9) est un prolongement de levier placé de manière non permanente sur le bras de charge (7').

**7.** Dispositif selon l'une des revendications 3 à 5, **caractérisé en ce que** les points de charge (B1, B2, B3) sont réalisés en tant que taillants ou coussinets.

Fig. 1

Fig. 2